Europäisches Patentamt

European Patent Office

Office européen des brevets

(19)

(11) Publication number:

**0 345 376**

**A1**

# EUROPEAN PATENT APPLICATION

(12)

(21) Application number: 88109202.7

(22) Date of filing: 09.06.88

(51) Int. Cl.⁴: **G05D 16/06**

(43) Date of publication of application:
**13.12.89 Bulletin 89/50**

(84) Designated Contracting States:
**DE FR GB IT**

(71) Applicant: **WYTWORNIA SPRZETU
KOMUNIKACYJNEGO "PZL-KRAKOW"
ul. Wroclawska 53
PL-30-011 Krakow(PL)**

(72) Inventor: **Szramel, Stanislaw
Os. Niepodleglosci 5/215
PL31-861 Krakow(PL)**

(74) Representative: **Füchsle, Klaus, Dipl.-Ing. et al
Hoffmann . Eitle & Partner Patentanwälte
Arabellastrasse 4
D-8000 München 81(DE)**

(54) **Valve.**

(57) The invention solves the problem of developing a valve, particularly a reduction valve, for compressed and condensed gases, particularly flammable gases.

The essence of this present invention involves the fact that the valve has a spindle 7 located in chamber 2 in side body 1 and which terminates in a closing component 8 and guide 6 accommodated inside an assymmetric seat 3 having a ring gland 4, guide 6 having located inside it a flow opening 5 whose inlet opening 9 is positioned close to the closing component 8 and at a certain distance from the ring gland 4. The valve also has a stem 10 of the spindle 7 located on the side opposite to the assymmetric seat 3 and which stem is sealed with a ring gland 13. In addition to the above, the valve also has an outlet chamber 16 located at a certain distance from the chamber 2, the outlet chamber 16 accommodating the guide 6 which is connected to a membrane 15 of the outlet chamber 16.

Fig.1

## Valve

The subject of this present invention is a valve used for controlling gas flow output and finds its application, particularly as a reduction valve, in industry, municipal management and transport.

The valves known from U.S. Patent Specification No. 3,782,410 and West German Specification No. 1,550,420 comprise internal glands mounted in closing components and cut off gas flow through the valve. Gas flow is damped by closing the radial inlet openings located in a tubular guide of the closing component accommodated inside the seat.

Due to its construction, the design as per No. 3,782,410 finds its application as a gas pressure stabiliser and the design as per No. 1,550,420, as a manually-operated, high-pressure cylinder valve.

The object of the present invention is to develop a valve, particularly a reduction valve, for compressed and condensed gases and, particularly, for flammable gases.

This object is solved according to the present invention in that the valve has a spindle accommodated inside the chamber of its body, which spindle terminates at the closing component and the guide located inside an assymmetric seat which comprises a ring gland, the guide having located inside it a flow opening whose inlet hole is positioned close to the closing component and at a certain distance from the ring gland. The valve has further a spindle stem located at the side opposite to the assymmetric seat and which is sealed with a ring gland. In addition to the above, the valve has an outlet chamber located at a certain distance from the chamber in the body of the valve and accommodates the guide, which guide is connected to the membrane of the outlet chamber.

The advantages of the valve according to the present invention are the simple construction, ensuring a low manufacturing cost, increased service life and operating efficiency, a short closing component stroke, the spindle is relieved from the basic forces originating from gas pressure or the maintenance of a continuous gas pressure against the spindle, irrespectively of the degree of opening of the valve, enabling an accurate and precision control of gas flow, good gas flow characteristics, and versatile application.

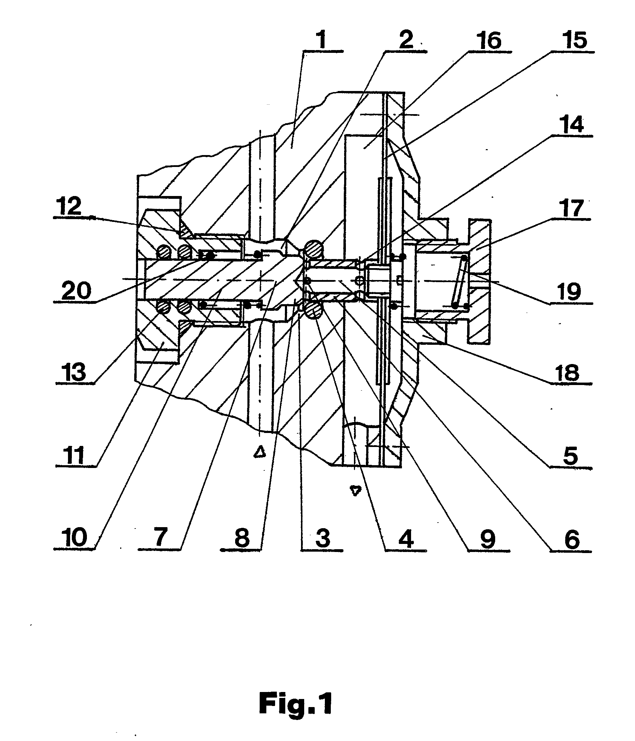

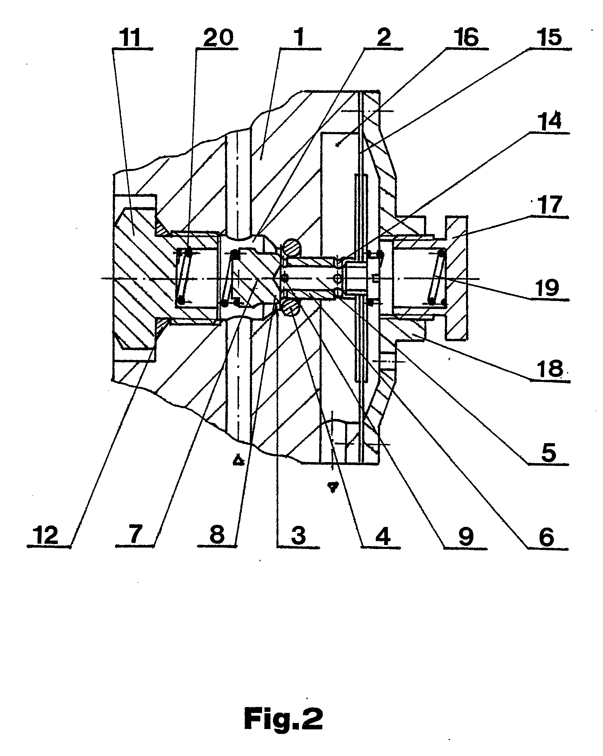

The subject of the invention is embodied in the drawings, where Fig. 1 shows a longitudinal section of the valve provided with a spindle, and Fig. 2 shows a longitudinal section of the same valve, but without the stem and its gland.

The valve according to the present invention has chamber 2 located in body 1 and an assymmetric seat 3 comprising a circular-sectioned ring gland 4. Inside the assymmetric seat 3 there is guide 6 provided with a flow opening 5 and which is used to guide a spindle 7 located in chamber 2, which terminates in a closing component 8 from on the side of the assymmetric seat 3. Close to the closing component 8 and at a certain distance from ring gland 4 there are located inlet openings 9 to the flow hole 5. On the side opposite to the closing component 8, spindle 7 has stem 10 located inside cover 11, sealed with gland 12 relative to the body 1 and with gland 13 relative to the stem 10.

At a certain distance from body 1 and chamber 2, the guide 6 has outlet openings 14 from the flow hole 5 and is connected to a membrane 15 of an outlet chamber 16, membrane 15 being coupled at the other side to an adjustment screw 17 mounted in a cover 18 via a spring 19. Furthermore, chamber 2 has a spring 20 located between the spindle 7 and the cover 11.

The operation of the valve according to the present invention is now described below.

Closing component 8 is acted upon by spring 20 and gas pressure to the ring gland 4, mounted in assymmetric seat 3, causes the gas flow through the valve to be cut off. Controlled gas flow through the valve can be attained by moving the closing component 8 from assymmetric seat 3 by tensioning the spring 19 with adjustment screw 17.

Varying damping of gas flow occurring between the closing component 8 and the assymmetric seat 3 results from the equilibrium of operating forces of the springs 19 and 20 and the gas pressure against the membrane 15 and the spindle 7. Constant damping of gas flow ensuring an appropriate pressure drop as a function of gas flow output occurs mainly in inlet openings 9 fully uncovered at every position of the valve opening, whose magnitude depends on the diameter of the cross section of ring gland 4.

The technical parameters and characteristics of the valve can be appropriately varied by selecting the number and geometry of inlet openings 9, flow openings 5, outlet openings 14, the characteristics of springs 19 and 20 and the size of membrane 15. The mounting of ring gland 4 in the assymmetric seat 3, whose position is stabilised by the external surface of guide 6, ensures the manufacture with the least surface of the closing component 8, the symmetrical mounting of the glands of guide 6 and stem 10, which is necessary to balance the gas pressure against the spindle 7 and to seal the ring space located between guide 6 and assymmetric seat 3 and sensitive to being mechanically contaminated.

It is also possible to control the valve externally by means of the stem 10.

Particularly advantageous technical parameters are shown by a two-step reduction valve obtained by the connection in series of the valves specified in the embodiment, which finds its application when, for example, a gaseous agent is automatically taken from a source showing a varying gas pressure by receivers requiring constant operating parameters, in particular, for example, for the underpressure supply of high-methane earth gas from a cylinder to various engines.

**Claims**

1. Valve, comprising a chamber (2) and a seat (3) inside the body (1) of the valve, said seat (3) accommodating a tubular guide (6) of a closing component (8) located inside the chamber (2), characterized in that the valve has a spindle (7) accommodated inside the chamber (2) of its body (1), which spindle (7) terminates at the closing component (8) and the guide (6) located inside an assymmetric seat (3) which comprises a ring gland (4), the guide (6) having located inside it a flow opening (5) whose inlet hole (9) is positioned close to the closing component (8) and at a distance from the ring gland (4).

2. Valve according to Claim 1, characterized in that it has a stem (10) of the spindle (7) located at the side opposite to the assymmetric seat (3) and which is sealed with a ring gland (13).

3. Valve according to Claim 1 or 2, characterized in that it has an outlet chamber (16) located at a certain distance from the chamber (2) and accommodates the guide (6), which guide (6) is connected to a membrane (15) of the outlet chamber (16).

**1** **2** **16** **15**

**14**

**12** **17**

**20** **19**

**13** **18**

**11** **5**

**10** **7** **8** **3** **4** **9** **6**

# Fig.1

**Fig.2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1737428 (N. L. MERCUR) <br> * page 1, line 27 - page 2, line 70; figure 1 * <br> --- | 1 | G05D16/06 |
| A | US-A-1927972 (H. A. YOUNG) <br> * page 1, left-hand column, line 30 - page 3, left-hand column, line 11; figures 1-3 * <br> --- | 1 | |
| A | US-A-2973007 (W. H. SCHUTMAAT) <br> * column 3, line 1 - line 35; figures 1, 2 * <br> --- | 1 | |
| A | FR-A-2071888 (THE ARO CORPORATION) <br> * figure 2 * <br> --- | 1 | |
| A | US-A-1938943 (C. M. TERRY) <br> * page 1, line 92 - page 3, line 53; figures 1-7 * <br> --- | 1 | |
| A | US-A-4373546 (R. KRAKOVSKY) <br> * abstract; figures 1, 2 * <br> --- | 1 | |
| A,D | US-A-3782410 (T. A. STEUBY) <br> --- | | TECHNICAL FIELDS SEARCHED (Int. Cl.4) |
| A,D | DE-B-1550420 (NINNELT ENTWICKLUNGS- UND VERTRIEBS-KG) <br> ----- | | G05D |

The present search report has been drawn up for all claims

| Place of search | Date of completion of the search | Examiner |
|---|---|---|
| THE HAGUE | 1 FEBRUARY 1989 | HELOT H.V. |